# EUROPEAN PATENT APPLICATION

(11) **EP 2 105 610 A1**
(43) Date of publication of application: **30.09.2009**
(21) Application number: 08102877.1
(22) Date of filing: 25.03.2008
(51) Int. Cl.: F03G 7/04, F03G 7/06, F01K 25/02, F25B 9/00

(54) **Method for converting thermal energy into mechanical work**

(71) Applicant: International Innovations Limited, Sydney NSW 2000 (AU)
(72) Inventor: Hargreaves, Steve, Broadbeach, QLD 4218 (AU)
(74) Representative: Babeluk, Michael

(57) **Abstract**

The present invention relates to a method for converting thermal energy into mechanical work with the following steps:
- pressurizing a hydraulic medium in a hydraulic circuit (100);
- converting the pressure of the hydraulic medium into mechanical work; High efficiency with a high flexibility can be achieved in that the hydraulic medium is pressurized in bladder accumulators (17, 27, 37, 47) by the pressure of a working medium circulating in a driving circuit which expands due to a rise in temperature induced by heat transfer to the bladder accumulators (17, 27, 37, 47). The present invention further relates to an apparatus for performing the method.

## Description

The present invention relates to a method for converting thermal energy into mechanical work. Such method includes the following steps:
- pressurizing a hydraulic medium in a hydraulic circuit;
- converting the pressure of the hydraulic medium into mechanical work.

Numerous types of cyclic processes and apparatuses are known which are used to convert thermal energy into mechanical work and subsequently optionally into electric current. They concern steam power processes, Sterling processes or the like. One possibility for using such methods is to increase the efficiency of internal combustion engines by making use of the waste heat. The problematic aspect is that the available temperature levels are relatively unfavorable because the cooling circulation of internal combustion engines usually works at temperatures which lie close to 100°C, e.g. at typical values of 85°C. There is a similar problem when heat from solar plants is to be transferred into mechanical work.

A special solution for such a thermal power process has been shown in WO 03/081011 A. This specification describes a method in which a hydraulic medium is pressurized by heating a working medium in several bladder accumulators, which medium is processed in an engine. Although such a method is principally functional it has been proven that the efficiency is low and the complexity of the machinery is relatively high in relationship to the quantity of energy that can be produced.

DE 32 32 497 A discloses a method and an apparatus for converting thermal energy into mechanical work in which hot working medium is conducted into a first working chamber of a heat exchanger, a first quantity of the working medium is heated in a second working chamber of the heat exchanger by the hot working medium, and the second working chamber of the heat exchanger is connected with a pneumo-hydraulic converter a hydraulic medium from the converter and ejected of by the pressure of the working medium. With this apparatus it is necessary to heat and cool the cylinder alternately which is time consuming due to the thermal capacity of the cylinder. The apparatus has therefore a limited efficiency.

US 4,617,801 A shows a thermal powered engine with free moving pistons. Pneumo-hydraulic converters are used to transfer pressure into the system. This apparatus has a complex structure and a limited efficiency. Another prior art system is disclosed in DE 32 46 633 A.

Further solutions showing the transfer from heat into mechanical work are disclosed in US 4,283,915 A, in GB 1 536 437 A and in US 5,548,957 A. For all these solutions the above comments are valid.

It is one object of the present invention to provide a method of the kind mentioned above in such a way that even under thermally unfavorable preconditions it is possible to achieve a high efficiency, with the configuration of apparatuses being kept as simple as possible.

Another object of the invention is to provide a method having high power density and is easy to control.

Still another object of the invention is to create an apparatus for conducting such process.

In accordance with the invention, such a method is **characterized in that** the hydraulic medium is pressurized in bladder accumulators by the pressure of a working medium circulating in a driving circuit which expands due to a rise in temperature induced by heat transfer to the bladder accumulators.

The system of the invention comprises two different fluid circuits: a hydraulic circuit and a driving circuit. It is important that in the hydraulic circuit a medium is used which is mainly incompressible like water or oil, whereas in the driving circuit a medium is used which undergoes a phase change so that high efficiency can be achieved.

These two circuits are coupled by a set of bladder accumulators which have two different functions: on the one hand the pressure of the medium of the driving circuit is transmitted to the hydraulic circuit and on the other hand there is thermal exchange between the two media and/or external sources.

The hydraulic circuit is used for converting the pressure energy of the medium into mechanical work with high efficiency. This can be accomplished by hydraulic motors or turbines which readily available in the market. From this mechanical work electrical power can be generated easily.

Preferably each of the accumulators is operated in the following way comprising four steps. There is some similarity to a four stroke internal combustion engine, however the four steps of this process will not take equal time.

Now these four steps are:
a) Partially filling a first chamber of the bladder accumulators with cold working medium;
b) heating the bladder accumulators so that the pressure inside will rise;
c) connecting the second chamber of the bladder accumulators with the hydraulic circuit and pressing hydraulic medium through the hydraulic engine while disconnecting the first chamber with the driving circuit;
d) connecting the second chamber of the bladder accumulators with a low pressure line of the hydraulic circuit and discharging working medium in an expansion line line of the driving circuit.

These four steps can be interpreted as three strokes when these steps are partially combined in the following way:
A "power delivery stroke" involves step c) only. A "reset stroke" involves at least steps d) and a) and may also include some part of step b). A "charging stroke involves step b) (the remainder of step b) if applicable) only.

Extending the duration of step b) is highly favorable since this will lead to a nearly reversible change of state which is optimal in view of efficiency.

In this way it is possible to operate the accumulators in a way of a three stroke process, each stroke having the same duration. Therefore, a continuous power output can be attained by arranging at least three accumulators operating cyclically phased by 120° in case of three accumulators or by 360/n° in general case of n accumulators.

The heat may be introduced into the driving medium in any suitable way during step b). However it is preferred to have the accumulators immersed in a bath of a heat transfer medium so that the accumulators are heated from outside. However due to the special features of bladder accumulators there will also be an internal heat transfer between the hydraulic medium and the working medium. This can enhance the cycle time of the apparatus. To compensate for a heat loss of the hydraulic medium it is preferred to heat the hydraulic medium before it is fed into the second chamber of the bladder accumulators.

Further it is preferred that the hydraulic medium is cooled after the hydraulic engine. In this way cooling of the machine representing the heart source can be enhanced.

In order to be able to have a maximum pressure differential at the hydraulic engine it is an advantage when the hydraulic medium is pumped into the second chamber of the bladder accumulators.

The efficiency of the cyclic process of the working medium can be enhanced when the working medium is pumped into the first chamber of the bladder accumulators. In this way it is possible to expand the working medium virtually to ambient pressure so that pressure differential and temperature differential is maximized.

Further the present invention relates to an apparatus for converting thermal energy into mechanical work, comprising a hydraulic circuit with a pressurizing unit and a hydraulic engine, and a driving circuit comprising a pump unit and connected to the pressurizing unit.

According to the invention the pressurizing unit consists of at least two bladder accumulators each having a first and a second chamber, the first chamber being connectable to the driving circuit and the second chamber being connectable to the hydraulic circuit, said bladder accumulators being in thermal contact to a heat source. The heat source can be a combustion engine used to drive some apparatus or to produce electrical energy. So heat which otherwise would be regarded as waste heat can be used to produce additional electrical energy or to drive another machine.

A preferred embodiment of the apparatus of the invention is designed in a way that the bladder accumulators are connected by first three-port valves to the driving circuit. It is further preferred that the bladder accumulators are connected by second three-port valves to the hydraulic circuit. In this way the apparatus can be controlled easily.

Optionally in the driving circuit an expander and/or a heat exchanger are arranged. In this way expansion losses can be minimized.

Now the invention is explained in closer detail by reference to embodiments shown in the drawings, wherein:
- Fig. 1: shows a block diagram of a first embodiment of the present invention;
- Fig. 1a: shows a variant of the embodiment of Fig. 1;
- Fig. 2: shows a block diagram of a second embodiment of the present invention and;
- Fig. 2a: shows a variant of the embodiment of Fig. 2.

A heat source 1 is a combustion engine which for example is used in a power station for producing electrical energy. Via pipe 2 coolant of the combustion engine representing the heat source 1 is fed to a heat exchanger 3, whereas exhaust 4 is fed to a further heat exchanger 5 arranged in a water bath 6.

In a second feeding line 7 of a hydraulic circuit 100 a second feeding pump 8 is arranged pumping hydraulic medium through heat exchanger 3 to the first ports 18a, 28a 38a and 48a of four second three-port valves 18, 28, 38 and 48 respectively. Second ports 18b, 28b 38b and 48b of the four second three-port valves 18, 28, 38 and 48 are connected to pressure line 9 through which hydraulic medium is fed to a hydraulic engine 10 which my be a hydraulic motor or a turbine which discharges the medium into second feeding line 7. At a second radiator 11 heat can be taken out of the system.

The third ports 18c, 28c, 38c and 48c of the four second three-port valves 18, 28, 38 and 48 are connected to second chambers 17b, 27b, 37b and 47b of bladder accumulators 17, 27, 37 and 47 respectively which are arranged in the water bath 6 so that they are in thermal contact to heat exchanger 5.

First chambers 17a, 27a, 37a and 47a of said bladder accumulators 17, 27, 37 and 47 are connected to third ports 19c, 29c, 39c and 49c of four first three-port valves 19, 29, 39 and 49.

First ports 19a, 29a, 39a and 49a of the four first three-port valves 19, 29, 39 and 49 are connected to a first feeding line 12 of a driving circuit 101 in which a first feeding pump 13 is provided. Second ports 19b, 29b, 39b and 49b of the four second three-port valves 19, 29, 39 and 49 are connected to an expansion line 14 which leads to an expander 15. A further radiator 16 is used to cool the working medium down.

Each of first and second three-port valves 19, 29, 39, 49; 18, 28, 38, 48 has three different settings: in a first setting the first port 19a, 29a, 39a, 49a; 18a, 28a, 38a, 48a is connected to the third port 19c, 29c, 39c, 49c; 18c, 28c, 38c, 48c respectively. In a second setting all ports 19a, 29a, 39a, 49a; 18a, 28a, 38a, 48a; 19b, 29b, 39b, 49b; 18b, 28b, 38b, 48b; 19c, 29c, 39c, 49c; 18c, 28c, 38c, 48c are separated from each other. In a third setting the second port 19b, 29b, 39b, 49b; 18b, 28b, 38b, 48b; is connected to the third port 19c, 29c, 39c, 49c; 18c, 28c, 38c, 48c respectively.

The bladder accumulators 17, 27, 37 and 47 are vessels made of steel or another suitable material having a flexible membrane dividing the interior of the vessel into two chambers. Pressure and temperature of media in these chambers is transmitted into the other chamber but mixture of the media is prevented. Such bladder accumulators are readily available in the market.

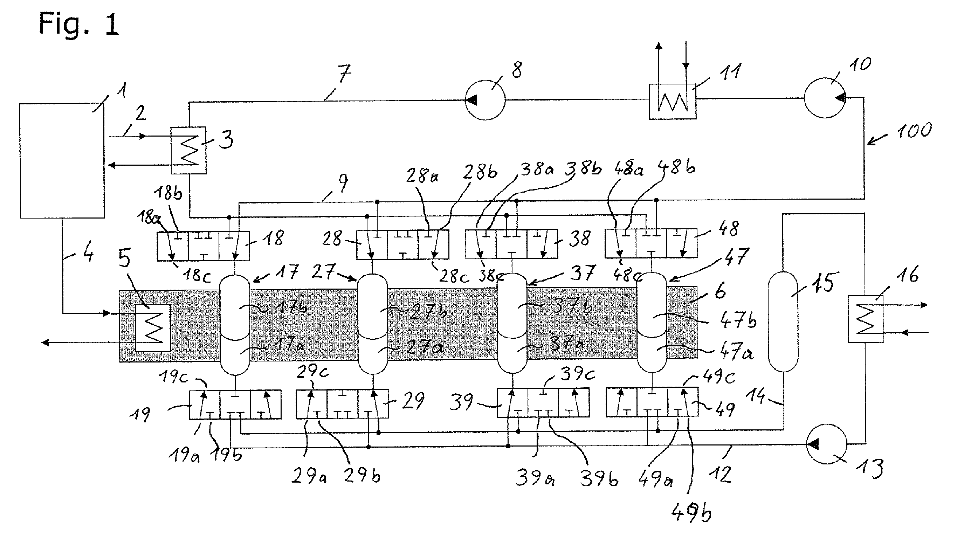

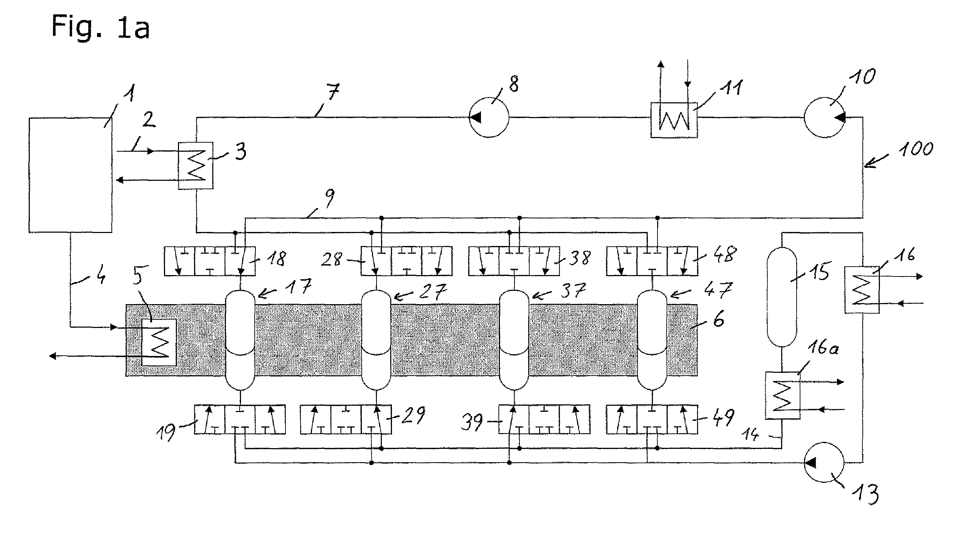

Now the function of the embodiment shown in Fig. 1 is explained in detail.

At first the driving circuit 101 is discussed. First feeding pump 13 pumps liquid working medium into one or more accumulators 17, 27, 37 and 47 via those of first three-port valves 19, 29, 39 and 49 which are in the first setting. At the same time hot gaseous working medium of other accumulators 17, 27, 37 and 47 is discharged into expansion line 14 via those of first three-port valves 19, 29, 39 and 49 which are in the third setting. In expander 15 the working medium is expanded and allowed to condense at least partially. Complete condensation will happen in further radiator 16. First feeding pump 13 is operated to rise pressure to a value needed for filing accumulators 17, 27, 37 and 47.

At the same time hydraulic circuit 100 is operated in the following way. Hot hydraulic medium is discharged into pressure line 9 at high pressure from those of accumulators 17, 27, 37 and 47 whose second three-port valves 18, 28, 38 and 48 which are in the third setting. The pressure is used in the hydraulic engine 10 to produce mechanical work. After pressure has been enhanced by second feeding pump 8 the hydraulic medium is fed into those of accumulators 17, 27, 37 and 47 whose second three-port valves 18, 28, 38 and 48 which are in the first setting.

The process is driven mainly by heat introduced by exhaust 4 and the further heat exchanger 5 arranged in water bath 6.

Now the steps are explained which are executed to drive the bladder accumulators 17, 27, 37 and 47:
a) Partially filling a first chamber 17a, 27a, 37a and 47a of the bladder accumulators 17, 27, 37 and 47 with cold working medium. In Fig. 1 the third accumulator 37 is shown during this step. It can be seen that the accumulator is separated from the hydraulic circuit 100 but connected to expansion line 14 of the driving circuit 101. At the beginning of this step the first chamber 37a of bladder accumulator 37 fills about 60% of the interior volume of accumulator 37. Second chamber 37b is filled with working medium mainly in gaseous state at low pressure. During this step liquid working medium is pressed into second chamber 37b so that the gas is compressed.
b) Heating the bladder accumulators so that the pressure inside will rise. The fourth accumulator 47 is in this state. All valves are closed and due to the heat transfer from the bath 6 working medium in first chamber 37a will evaporate. Therefore pressure inside the accumulator 47 rises.
c) Connecting the second chamber of the bladder accumulators with the hydraulic circuit and pressing hydraulic medium through the hydraulic engine while disconnecting the first chamber with the driving circuit. This step is visible in Fig. 1 with first accumulator 17. The first chamber 17a will expand and at the end of this step volume of second chamber 17b will be minimal.
d) connecting the second chamber of the bladder accumulators with a second feeding line 7 of the hydraulic circuit 100 and discharging working medium in an expansion line of the driving circuit. This step is visible with second accumulator 27. Second chamber 27b is filled up with hydraulic medium till a procentic of about 60% of the volume of accumulator 27 is used by hydraulic medium.

The embodiment of Fig. 1a differs from that of Fig. 1 in that a further heat exchanger 16a is arranged upstream of expander 15. If the working medium at rised pressure is cooled down to ambient temperature it is possible to get out cooling power at heat exchanger 16 so that a refrigeration circuit can be fed with cooling medium.

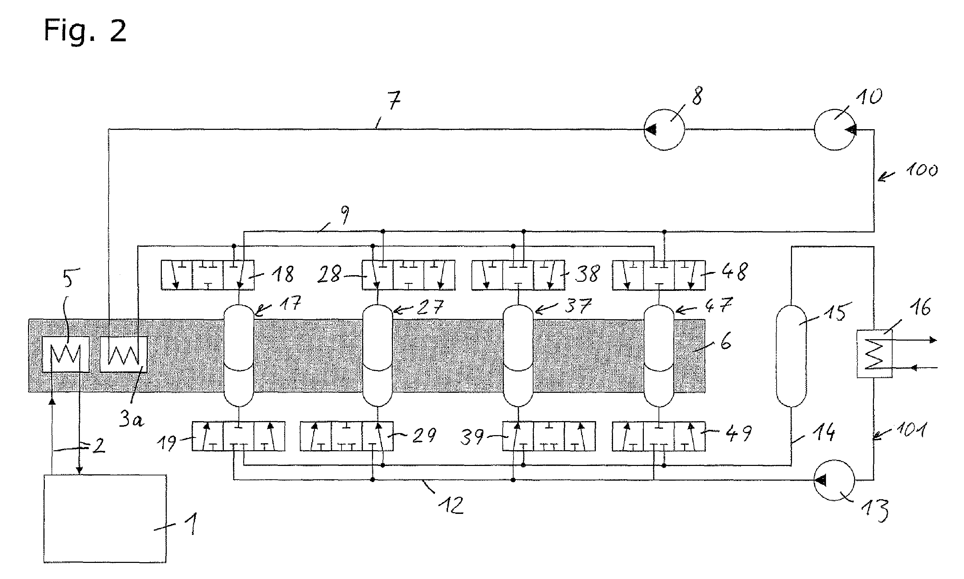

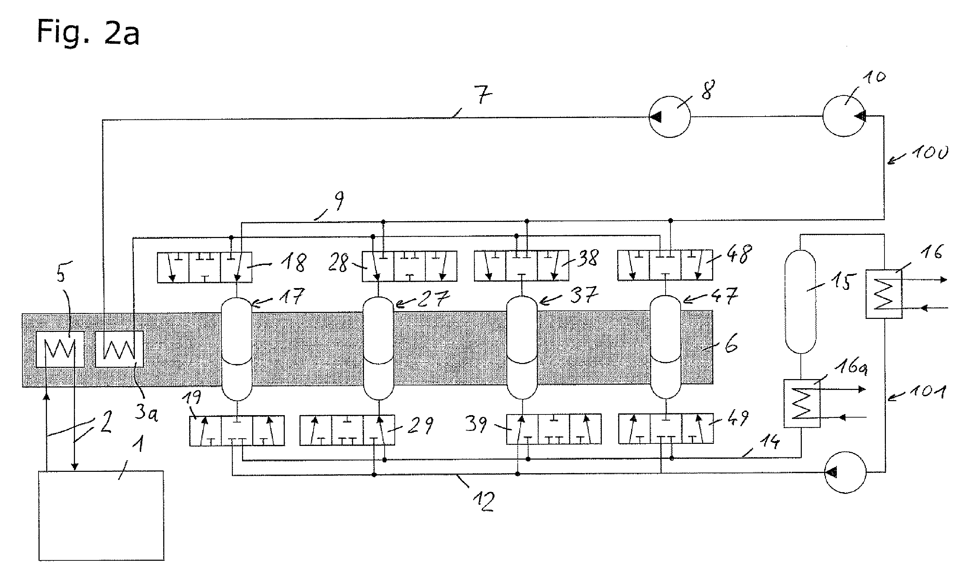

The embodiment of Fig. 2 is in its basic principle similar to that of Fig. 1. However, heat of the heat source 1 is fed to the water bath 6 only and reheating of the hydraulic medium in second feeding line 7 is accomplished by a heat exchanger 3a arranged in hot water bath 6 near heat exchanger 5. A further difference to the embodiment of Fig. 1 is that there is no second radiator downstream from hydraulic engine 10 in the hydraulic circuit 100. The embodiment of Fig. 2a differs similar to that of Fig. 1a in that there is an additional radiator 16a to provide cooling power at radiator 16.

The fluids used in the apparatus (hydraulic medium and working medium) can be chosen depending on the needs and temperature levels needed.

The advantages of the systems are that the working medium is heated while it expands in accumulators. This tends to maintain the temperature and pressure. Heating the working fluid while it is expanding is thermodynamically ideal and for example is incorporated in the high efficiency Sterling Cycle even if the cycle process of the invention is not a Sterling Cycle a high efficiency can be achieved nevertheless. Further it is possible to operate the cycle slowly especially expansion step b). Therefore further losses can be avoided. The process and the apparatus for conducted the process are simple and friction can be reduced compared to systems working on basis of cylinders and pistons.

## Claims

1. A method for converting thermal energy into mechanical work with the following steps:
- pressurizing a hydraulic medium in a hydraulic circuit (100);
- converting the pressure of the hydraulic medium into mechanical work;
**characterized in that** the hydraulic medium is pressurized in bladder accumulators (17, 27, 37, 47) by the pressure of a working medium circulating in a driving circuit which expands due to a rise in temperature induced by heat transfer to the bladder accumulators (17, 27, 37, 47).

2. A method according to claim 1, wherein the bladder accumulators (17, 27, 37, 47) are operated in the subsequent steps:
- partially filling a first chamber (17a, 27a, 37a, 47a) of the bladder accumulators (17, 27, 37, 47) with cold working medium;
- heating the bladder accumulators (17, 27, 37, 47) so that the pressure inside will rise;
- connecting the second chamber (17b, 27b, 37b, 47b) of the bladder accumulators (17, 27, 37, 47) with the hydraulic circuit (100) and pressing hydraulic medium through a hydraulic engine (10) while disconnecting the first chamber (17a, 27a, 37a, 47a) with the driving circuit (101);
- connecting the second chamber (17b, 27b, 37b, 47b) of the bladder accumulators (17, 27, 37, 47) with a second feeding line (7) of the hydraulic circuit (100) and discharging working medium in a low pressure (14) line of the driving circuit (101).

3. A method according to one of claims 1 or 2, wherein there are at least two, preferable at least three bladder accumulators (17, 27, 37, 47) which are operated cyclically.

4. A method according to one of claims 1 to 3, wherein the bladder accumulators (17, 27, 37, 47) are heated from outside.

5. A method according to one of claims 1 to 4, wherein the hydraulic medium is heated before fed into the second chamber (17b, 27b, 37b, 47b) of the bladder accumulators (17, 27, 37, 47).

6. A method according to one of claims 1 to 5, wherein the hydraulic medium is cooled downstream of the hydraulic engine (10).

7. A method according to one of claims 1 to 6, wherein the hydraulic medium is pumped into the second chamber (17b, 27b, 37b, 47b) of the bladder accumulators (17, 27, 37, 47).

8. A method according to one of claims 1 to 7, wherein the working medium is pumped into the first chamber (17a, 27a, 37a, 47a) of the bladder accumulators (17, 27, 37, 47).

9. An apparatus for converting thermal energy into mechanical work, comprising a hydraulic circuit (100) with a pressurizing unit and a hydraulic engine (10), and a driving circuit (101) comprising a pump unit and connected to the pressurizing unit, **characterized in that** the pressurizing unit consists of at least two bladder accumulators (17, 27, 37, 47) each having a first and a second chamber (17a, 27a, 37a, 47a; 17b, 27b, 37b, 47b), the first chamber (17a, 27a, 37a, 47a) being connectable to the driving circuit (101) and the second chamber (17b, 27b, 37b, 47b) being connectable to the hydraulic circuit (100), said bladder accumulators (17, 27, 37, 47) being in thermal contact to a heat source (1).

10. An apparatus according to claim 9, wherein the bladder accumulators (17, 27, 37, 47) are surrounded by a heat transfer medium.

11. An apparatus according to one of claims 9 or 10, wherein the bladder accumulators (17, 27, 37, 47) are connected by first three-port valves (19, 29, 39, 49) to the driving circuit (101).

12. An apparatus according to one of claims 9 to 11, wherein the bladder accumulators (17, 27, 37, 47) are connected by second three-port valves (18, 28, 38, 48) to the hydraulic circuit (100).

13. An apparatus according to one of claims 9 to 12, wherein in the hydraulic circuit (100) comprises a radiator (11) downstream of the hydraulic engine (10) and a heat exchanger (3) downstream of the radiator (11).

14. An apparatus according to one of claims 9 to 13, wherein the working medium is heated by a cooling circuit (2) and/ or exhaust gas (4) of a combustion engine.

15. An apparatus according to one of claims 9 to 14, wherein in the driving circuit (101) an expander (15) and/or a heat exchanger (16, 16a) are arranged.

16. An apparatus according to one of claims 9 to 15, wherein the working medium is a refrigerant, preferably R410A.
